# EUROPÄISCHE PATENTSCHRIFT

(11) **EP 1 657 614 B1**
(45) Veröffentlichungstag und Bekanntmachung des Hinweises auf die Patenterteilung: **25.07.2007**
(21) Anmeldenummer: 05405573.6
(22) Anmeldetag: 06.10.2005
(51) Int. Cl.: G05D 25/02, H05B 37/02, G01J 1/42

(54) **Beleuchtungssteuerung**
Lighting control
Commande d' éclairage

(30) Priorität: 11.11.2004 CH 18562004
(43) Veröffentlichungstag der Anmeldung: 17.05.2006
(73) Patentinhaber: HTS High Technology Systems AG, 8307 Effretikon (CH)
(72) Erfinder: Pfeiffer, Walter, 8308 Illnau (CH); Blumer, Fritz, 8604 Volketswil (CH); Hüppi, Thomas, 8400 Winterthur (CH)
(74) Vertreter: Breiter, Heinz

(56) Entgegenhaltungen:
- DE-A1- 19 944 024
- US-A- 5 455 487
- US-A- 5 581 158

## Beschreibung

Die Erfindung bezieht sich auf ein Verfahren zur Steuerung einer Beleuchtungsanlage, welches bei einer vorgegebenen Beleuchtungsstärke die Beleuchtung in einem zu beleuchtenden Bereich, insbesondere an einem Arbeitsplatz, mit sich ändernden Reflexionsbedingungen regelt. Weiter betrifft die Erfindung eine Steuerungseinrichtung einer Beleuchtungsanlage mit wenigstens einem Lichtsensor, wenigstens einem Sender für modulierte oder kontinuierliche Messsignale, wenigstens einem Empfänger für die reflektierten Messsignale und einer Auswertungs- und Steuereinheit zur Durchführung des Verfahrens.

Eine individuell anpassbare, richtige Beleuchtung hat einen grossen Einfluss auf die Leistungsfähigkeit von Menschen, gegebenenfalls auch von Nutztieren, wobei eine richtige Beleuchtung sowohl zu wenig als auch zu viel Licht vermeiden muss. Neben der Leistungsfähigkeit kommt vor allem in kommerziell genutzten Räumen, wie Büros, Werkstätten, Verkaufsflächen und übrigen Arbeitsräumen jeglicher Art, auch den Kosten und nicht zuletzt ökologischen Aspekten eine wesentliche Bedeutung zu. Hohe Beleuchtungsintensitäten erfordern aufwendige und damit teure Installationen und fallen durch erhöhten Energie- und Wartungsaufwand auch bei den laufenden Betriebskosten stärker ins Gewicht. Darüber hinaus sind die ökologischen Belastungen durch höheren Material- und Energieverbrauch deutlich grösser. Eine richtige Beleuchtung muss also ein Optimum von leistungsbezogener Helligkeit, technischem und energetischem Aufwand bilden.

Bekannte Lösungen versuchen, diesen Anforderungen dadurch Rechnung zu tragen, dass die vorhandene Helligkeit mit einem Lichtsensor gemessen und die künstliche Beleuchtung erst bei einem Unterschreiten eingestellter Schwellenwerte, insgesamt oder stufenweise, eingeschaltet wird. Andere bekannte Verfahren nutzen das Signal des Lichtsensors dazu, das Kunstlicht so zu regeln, dass die Summenhelligkeit aus natürlichem Tages- und erzeugtem Kunstlicht auf einem eingestellten Sollwert konstant gehalten wird.

Eine Beleuchtungsteuerungsschaltung mit Aussenlicht Kompensation ist aus der US 5,581,158 bekannt.

Aus praktischen Gründen werden die Sensoren an einer Wand oder der Decke der jeweiligen Räume angebracht, da sie dort einfach in die Installation der Beleuchtungsanlage integriert werden können und vor allem die Arbeitsprozesse in den betreffenden Räumen nicht behindern. Weiter könnten im unmittelbaren Arbeitsbereich angebrachte Sensoren durch Gegenstände jeglicher Art versehentlich abgeschirmt werden, beispielsweise durch Dokumente auf dem Schreibtisch.

Bei allen bekannten Verfahren werden, bedingt durch die Anordnung der Sensoren, die sich allenfalls ändernden lichttechnischen Eigenschaften der Arbeitsbereiche nicht berücksichtigt. Dies gilt insbesondere für die Reflexionseigenschaften der Arbeitsflächen. Beispielsweise wird in einem mit dunklen Teppichen und Möbeln ausgestatteten Büro ein Lichtsensor, bei gleicher Menge an einfallendem Kunst- und Tageslicht, weniger Helligkeit messen. Der Lichtsensor wird dementsprechend versuchen, mehr Kunstlicht einzuschalten als derselbe Lichtsensor unter gleichen Beleuchtungsbedingungen in einem hell möblierten Büro. Dieser Fehler wird verursacht durch den unterschiedlichen Reflexionsfaktoren der Oberflächen in dem betreffenden Raum.

Erschwerend kommt hinzu, dass diese Reflexionseigenschaften nicht statisch, sondern dynamisch sind und sich laufend ändern können. Wenn beispielsweise in einem mit anthrazitfarbenen Tischen und Teppichen ausgestatteten Architekturbüro Pläne ausgebreitet werden, ergeben sich durch die stark reflektierenden weissen Pläne massive Änderungen für eine richtige Beleuchtung.

Im folgenden werden insbesondere die folgenden lichttechnischen Ausdrücke verwendet:
- Lichtstrom Φ. Der Lichtstrom Φ ist die Lichtleistung, welche die Lichtquelle in alle Richtungen abstrahlt. Die Einheit des Lichtstroms ist das Lumen (Im).
- Lichtstärke I. Als Lichtstärke I wird der in einer bestimmten Richtung in den Raumwinkel Ω eingestrahlte Lichtstrom Φ bezeichnet, die Einheit der Lichtstärke ist die Candela (cd).
- Beleuchtungsstärke E. Die Beleuchtungsstärke E ist der Quotient des auf eine Fläche aufstrahlenden Lichtstroms Φ zur Flächengrösse A. Die Einheit der Beleuchtungsstärke ist das Lux (Ix).
- Leuchtdichte L. Die Leuchtdichte L ist die bestimmende Grösse für den Helligkeitseindruck. Die Einheit der Leuchtdichte ist die Candela pro m² (cd / m²). Vom menschlichen Auge wird die Leuchtdichte L wahrgenommen.

Der Erfindung liegt die Aufgabe zugrunde, ein Verfahren und eine Vorrichtung zu dessen Betrieb zu schaffen, die aus einer Beleuchtungsstärke, welche von einem beleuchteten Bereich reflektiert wird, unabhängig von der Reflexion die tatsächliche Beleuchtungsstärke auf einem beleuchteten Bereich berechnen und bei einer Abweichung korrigieren.

Bezüglich des Verfahrens wird die Aufgabe erfindungsgemäss dadurch gelöst, dass
- wenigstens ein vom beleuchteten Bereich entfernt angeordneter Lichtsensor die gesamte Beleuchtungsstärke misst und beim Überschreiten eines einstellbaren Schwellenwertes die Beleuchtungsanlage ausschaltet, beim Unterschreiten einschaltet, oder die Beleuchtungsanlage auf einen vorgegebenen Wert regelt,
- von wenigstens einem Sender modulierte oder kontinuierliche Messsignale auf den beleuchteten Bereich gesendet, von dort reflektiert und von wenigstens einem Empfänger gezielt empfangen werden,
- eine Auswertungs- und Steuereinheit aus dem Vergleich der gesendeten Messsignale und der reflektierten Messsignale einen Korrekturfaktor bestimmt, diesen mit einer vorgegebenen, kalibrierten Kennlinie bewertet und die gemessene Beleuchtungsstärke korrigiert, und
- bei einer Abweichung der korrigierten Beleuchtungsstärke von der vorgegebenen Beleuchtungsstärke die Lichtstärke der Beleuchtungsanlage erhöht oder erniedrigt.

Spezielle und weiterbildende Ausführungsformen des Verfahrens sind Gegenstand von abhängigen Patentansprüchen.

Die Beleuchtungsanlage wird von wenigstens einem Lichtsensor oder von wenigstens einem Lichtsensor und wenigstens einem Präsenzmelder gesteuert oder geregelt. Die Beleuchtungsanlage wird also nicht nur aufgrund des Tageslichtes, sondern auch aufgrund der An- oder Abwesenheit von wenigstens einer Person eingeschaltet, ausgeschaltet oder geregelt.

In den meisten Fällen strahlt der Sender von menschlichen Sinnesorganen nicht wahrnehmbare Messsignale ab, vorzugsweise in Form von Infrarotsignalen, welche kurz IR-Signale genannt werden. Weitere einsetzbare Messsignale sind z. B. Ultraviolettstrahlen, Laserstrahlen und Ultraschallwellen, welche jedoch ohne Ausnahme ungünstiger als IR-Messsignale sind. Als besonders günstig haben sich IR-Signale mit einer dem sichtbaren Bereich benachbarten Wellenlänge, insbesondere λ = 800 bis 900 nm, erwiesen. Diese Wellenlängen können in der Regel nicht nur von einem Empfänger für reflektierte Messsignale, sondern auch vom Lichtsensor erfasst werden.

Nach einer speziellen Ausführungsform der Erfindung strahlt der Sender sichtbare Lichtsignale ab, welche reflektiert und sowohl vom Empfänger für die reflektierten Messsignale als auch vom Lichtsensor gezielt empfangen werden.

Für das Bestimmen des Faktors, wie der Korrekturfaktor einfachheitshalber auch genannt wird, wird der Sender zweckmässig mit einem elektrischen Peakstrom betrieben und aus der Amplitudenänderung des reflektierten Messsignals dieser Faktor bestimmt. Damit sich der Sender bei jedem Intervall etwas abkühlen kann, werden die rechteckigen Signale vorzugsweise in Intervallen von 5 bis 20 ms getaktet, ein Stromimpuls wird nur während 0,05 bis 0,2 ms erzeugt. Als optimal haben sich Intervalle von etwa 10 ms und Stromimpulse während etwa 0,1 ms erwiesen.

Die Kennlinie zur Bewertung des Faktors wird auf einer weissen Unterlage kalibriert. Weicht die Unterlagsfarbe teilweise oder vollständig von der Grundfarbe weiss ab, führt dies zu einer Verschiebung der Kennlinie. Dabei ergibt sich pro Farbe ein charakteristischer Korrekturfaktor, einfachheitshalber Faktor genannt. Alle Farben und somit deren Korrekturfaktoren ergeben dann die Korrekturfaktor-Kennlinie.

Die vorzugsweise im wesentlichen gerade Kennlinie ist abhängig vom Abstand des zu beleuchtenden Bereichs zum Sender/Empfänger. Je grösser dieser Abstand ist, desto grösser sind auch die Anforderungen an die Genauigkeit der Sender/Empfänger. Da diese aus praktischen, installationstechnischen und Kostengründen bevorzugt im Bereich der Decke oder einer Wand montiert sind, was einen Abstand im Bereich von 2 m zur Folge hat, sind die Anforderungen an die Geräte praktisch immer sehr hoch.

In Bezug auf die Steuerungseinrichtung wird die Aufgabe erfindungsgemäss dadurch gelöst, dass die Sender eine leistungsstarke IR-LED mit einer Sensorfläche und die Empfänger eine hochempfindliche Photodiode oder einen Photowiderstand umfassen, wobei ein entfernt angeordnetes Sender-/Empfängerpaar ein identisches oder weitgehend identisches Arbeitsspektrum aufweist. Spezielle und weiterbildende Ausführungsformen der Steuerungseinrichtung sind Gegenstand von abhängigen Patentansprüchen.

Mehrere parallel geschaltete Sender können einen gemeinsamen oder eine unterschiedliche Anzahl Empfänger haben und so verschiedene Sende r-/Empfängerpaare bilden. Der Lichtsensor kann auch Empfänger für die reflektierten Messsignale sein, dies gilt insbesondere beim Einsatz von sichtbaren oder von dem sichtbaren Bereich benachbarten IR-Messsignalen. Die Berechnung des Korrekturfaktors erfolgt entsprechend.

Die Leuchtintensität einer Infrarotlicht abstrahlenden Diode (IR-LED) erreicht beispielsweise eine Lichtstärke von maximal 800 mW/sr, welche durch einen gepulsten bzw. modulierten Betrieb erreicht wird. Dabei kann über einen Vorwiderstand ein 100 µs langer Stromimpuls von 1,5 A erzeugt werden. Um die IR-LED nicht durch Überhitzung zu beschädigen, muss sie nach jedem Stromimpuls 9,9 ms abkühlen. Die durch die kurzzeitige Stromspitzen der Sender entstehende Störungen auf der Empfängerseite können möglichst gering gehalten werden, wenn der Sendeteil als alleinstehende Schaltung aufgebaut ist.

Um eine hohe Leuchtintensität und ein möglichst homogenes IR-Lichtfeld zu erzeugen, werden vorzugsweise mehrere parallel geschaltete und regelmässig verteilt abstrahlende IR-LED eingesetzt. Für die Beleuchtung eines Arbeitsplatzes werden beispielsweise vier bis sechs parallel geschaltete IR-LED eingesetzt. Diese Sender haben in der Regel einen gemeinsamen zentralen Empfänger für die reflektierten Messsignale.

Als Empfänger dient beispielsweise ein Wechsellichtsensor IC-WQ von IE-Haus. Dieser verfügt über eine integrierte Photodiode, eine Verstärkerschaltung sowie ein Bandpassfilter. Das Bandpassfilter filtert in Richtung des zu beleuchtenden Bereichs hochfrequentes Rauschen sowie stetig andauerndes Licht aus.

Die Signalverarbeitung erfolgt in einer Auswertungs- und Steuereinheit oder in einem Mikroprozessor.

Vorzugsweise ist im Bereich des Senders-/Empfängerpaars wenigstens ein die Beleuchtungsanlage regelnder Präsenzmelder angeordnet. Der Lichtsensor kann in den Präsenzmelder integriert sein.

Wie erwähnt müssen mit zunehmenden Abstand des Sender-/Empfängerpaars vom zu beleuchtenden Bereich hoch- und höchstempfindliche Geräte eingesetzt werden. Mit zunehmender Empfindlichkeit einer Photodiode bzw. eines Photowiderstandes nimmt auch der Einfluss der Störfaktoren zu. Nach einer besonderen Ausführungsform der Erfindung wird deshalb die Photodiode von einer Hülse abgeschirmt, welche sich in Richtung des beleuchteten Bereichs erstreckt. Dadurch werden ausserhalb der beleuchtenden Fläche liegende Störfaktoren weitgehend abgeschirmt bzw. absorbiert.

Mit der erfindungsgemässen Lösung kann eine Beleuchtungsanlage eine vorgegebene Beleuchtungsstärke in einem zu beleuchtenden Bereich bei allen sich ändernden Reflexionsbedingungen stets einhalten. Dies ist besonders vorteilhaft für die Beleuchtung eines Arbeitsplatzes, der Benutzer fühlt sich dank der etwa gleich bleibenden Leuchtdichte wohl.

Die Erfindung wird anhand von in der Zeichnung dargestellten Ausführungsbeispielen, welche auch Gegenstand von abhängigen Patentansprüchen sind, näher erläutert. Es zeigen schematisch:
- Fig. 1 einen Raum mit einer Beleuchtungsanlage,
- Fig. 2 eine Einrichtung für die Messung der Beleuchtungsstärke, und
- Fig. 3 eine Beleuchtungssteuerung eines beleuchteten Arbeitsplatzes.

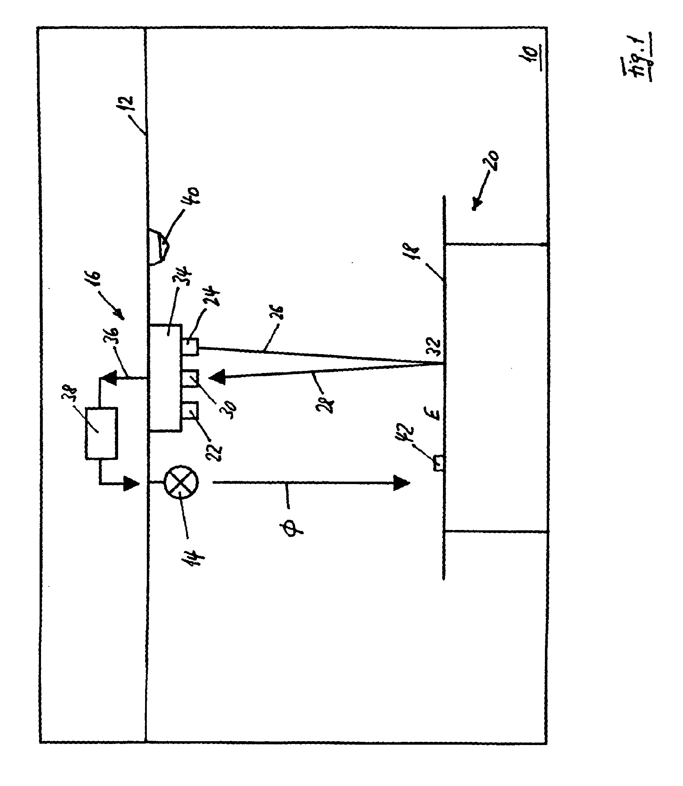

Fig. 1 zeigt einen Raum 10 mit einer heruntergehängten Decke 12, an welcher eine Beleuchtungsanlage 14 und eine Steuerungseinrichtung 16 befestigt ist. Ein Tisch 20 bzw. die Oberfläche von dessen Tischplatte begrenzt den zu beleuchtenden Bereich 18, welcher die Arbeitsfläche bildet.

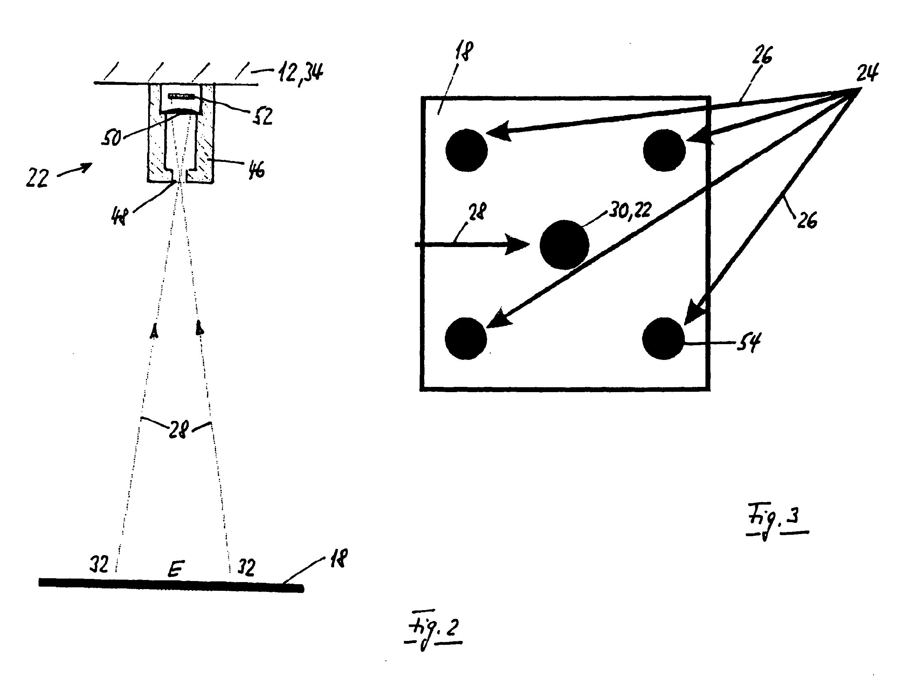

Ein von der Beleuchtungsanlage 14 in alle Richtungen ausgestrahlter Lichtstrom Φ ist durch einen senkrecht zum zu beleuchtenden Bereich 18 verlaufenden Pfeil dargestellt. Ein Lichtsensor 22 misst die Beleuchtungsstärke E durch Abbildung auf eine Sensorfläche 52 im Bereich der Decke 12 in Lux, wie dies in Fig. 2 dargestellt wird. Ein Sender 24, vorliegend eine IR-LED, sendet Messsignale 26 in Richtung des beleuchteten Bereichs 18, von wo, reduziert um eine materialabhängige Absorption, die reflektierten Messsignale 28 abstrahlen und von einem Empfänger 30 detektiert werden. Aus dem Verhältnis der reflektierten Messsignale 28 zu den gesendeten Messsignalen 26 wird ein Mass für die Reflexion 32 bestimmt. Grundsätzlich könnte dieser auch durch Messungen mit dem Lichtsensor 22 bestimmt werden.

Eine Auswertungs- und Steuereinheit 34 berechnet die Beleuchtungsstärke E des zu beleuchtenden Bereichs 18 mit Hilfe einer kalibrierten Kennlinie. Ein entsprechendes Signal 36 steuert einen Aktuator 38, welcher den zu korrigierenden Lichtstrom Φ der Beleuchtungsanlage 14 einstellt.

An der Decke 12 ist auch ein Präsenzmelder 40 angeordnet, welcher die Beleuchtungsanlage 14 abhängig von der Anwesenheit von Personen ein- oder ausschaltet.

Unabhängig vom erfindungsgemässen Verfahren kann ein Luxmeter 42 die Beleuchtungsstärke E der den beleuchteten Bereich 18 bildenden Arbeitsfläche in Lux messen und anzeigen.

Fig. 2 zeigt Details eines Lichtsensors 22, welcher an der Decke 12 oder an der Auswertungs- und Steuereinheit 34 (Fig. 1) angeordnet ist. Der Lichtsensor 22 misst die gesamte Lichtmenge aus reflektiertem Licht der Beleuchtungsanlage 14 und des Senders 24, falls letzterer sichtbares Licht oder diesem benachbarte IR-Strahlen sendet. Eine Hülse 46 mit einer Eintrittsöffnung 48 für die reflektierten Messsignale 28 bildet das Gehäuse des Lichtsensors 22. In der Hülse 46 ist eine Linse 50 angeordnet, vorliegend eine Kollimatorlinse, welche die reflektierten Messsignale 28 auf einer Sensorfläche 52 abbildet. So kann die Beleuchtungsstärke E eines entfernten beleuchteten Bereichs 18 mit einem an der Decke platzierten Lichtsensor 22 gemessen werden. Dabei wird von einer weissen Tischfläche 18 ausgegangen, welche direkt unter dem Lichtsensor 22 platziert ist. Die Hülse 46 mit der Eintrittsöffnung 48 verhindert den Einfluss des Störlichts praktisch vollständig.

Fig. 3 zeigt einen quadratisch umrandeten beleuchteten Bereich 18, vorliegend in der Form eines Arbeitsplatzes, welcher mit den gesendeten Messsignalen 26 von vier Sendern 24 beaufschlagt wird. Es sind auf die vier Ecken des beleuchteten Bereichs 18 gerichtete Messsignale 26 eingezeichnet, was mit vier Kreisen 54 dargestellt ist. Die reflektierten Messsignale 28 werden von einem gemeinsamen Empfänger 30, allenfalls vom Lichtsensor 22, gezielt empfangen. So kann das sich ändernde Reflexionsverhalten eines mit Gegenständen aller Art belegten beleuchteten Bereichs 18 besser berechnet und ausgewertet werden.

## Patentansprüche

1. Verfahren zur Steuerung einer Beleuchtungsanlage (14), welches bei einer vorgegebenen Beleuchtungsstärke (E₀) in einem zu beleuchtenden Bereich (18), insbesondere an einem Arbeitsplatz, mit sich ändernden Reflexionsbedingungen regelt,
**dadurch gekennzeichnet, dass**
- wenigstens ein vom beleuchteten Bereich (18) entfernt angeordneter Lichtsensor (22) die gesamte Beleuchtungsstärke (E) misst und beim Überschreiten eines einstellbaren Schwellenwertes die Beleuchtungsanlage (14) ausschaltet, beim Unterschreiten einschaltet, oder die Beleuchtungsanlage (14) auf einen vorgegebenen Wert regelt,
- von wenigstens einem Sender (24) modulierte oder kontinuierliche Messsignale (26) auf den beleuchteten Bereich (18) gesendet, von dort reflektiert und von wenigstens einem Empfänger (30, 22) gezielt empfangen werden,
- eine Auswertungs- und Steuereinheit (34) aus dem Vergleich der gesendeten Messsignale (26) und der reflektierten Messsignale (28) einen Korrekturfaktor bestimmt, diesen mit einer vorgegebenen, kalibrierten Kennlinie bewertet und die gemessene Beleuchtungsstärke (E) korrigiert, und
- bei einer Abweichung der korrigierten Beleuchtungsstärke (E) von der vorgegebenen Beleuchtungsstärke (E₀) die Lichtstärke (1) der Beleuchtungsanlage (14) automatisch erhöht oder erniedrigt.

2. Verfahren nach Anspruch 1, **dadurch gekennzeichnet, dass** die Beleuchtungsanlage (14) von wenigstens einem Lichtsensor (22) oder von wenigstens einem Lichtsensor (22) und wenigstens einem Präsenzmelder (40) gesteuert oder geregelt wird.

3. Verfahren nach Anspruch 1 oder 2, **dadurch gekennzeichnet, dass** der Sender (24) von menschlichen Sinnesorganen nicht wahrnehmbare Messsignale (26) abstrahlt, vorzugsweise IR-Signale.

4. Verfahren nach Anspruch 1 oder 2, **dadurch gekennzeichnet, dass** der Sender (24) sichtbare Lichtsignale (26) abstrahlt.

5. Verfahren nach einem der Ansprüche 1 bis 4, **dadurch gekennzeichnet, dass** der Sender (24) mit einem Peakstrom betrieben und aus der Amplitudenänderung des reflektierten Messsignals (28) der Korrekturfaktor bestimmt wird.

6. Verfahren nach Anspruch 5, **dadurch gekennzeichnet, dass** zur Erzeugung der rechteckigen, in Intervallen von 5 bis 20 ms getakteten Messsignale während 0,05 bis 0,2 ms ein Stromimpuls erzeugt wird.

7. Verfahren nach einem der Ansprüche 1 bis 6, **dadurch gekennzeichnet, dass** es mit einer im wesentlichen geraden, auf einer weissen Unterlage (18) kalibrierten Kennlinie durchgeführt wird, welche einen farbabhängigen Korrekturfaktor definiert.

8. Verfahren nach einem der Ansprüche 1 bis 7, **dadurch gekennzeichnet, dass** es mit einer vom Abstand des zu beleuchtenden Bereichs zum Sender (24) / Empfänger (30) abhängigen, kalibrierten Kennlinie durchgeführt wird, die im wesentlichen gerade verläuft.

9. Steuerungseinrichtung (16) für eine Beleuchtungsanlage (14), wobei die Steuerungseinrichtung wenigstens einen Lichtsensor (22), wenigstens einen Sender (24) für modulierte oder kontinuierliche Messsignale (26), wenigstens einen Empfänger (30) für die reflektierten Messsignale (28) und eine Auswertungs- und Steuereinheit (34) zur Durchführung des Verfahrens nach einem der Ansprüche 1 bis 8, aufweist,
**dadurch gekennzeichnet, dass**
die Sender (24) eine leistungsstarke IR-LED mit einer Sensorfläche (52) und die Empfänger (30, 22) eine hochempfindliche Photodiode oder einen Photowiderstand umfassen, wobei ein entfernt angeordnetes Sender-/Empfängerpaar (24, 30 und/oder 22) ein identisches oder weitgehend identisches Arbeitsspektrum aufweist.

10. Steuerungseinrichtung (16) nach Anspruch 9, **dadurch gekennzeichnet, dass** im Bereich des Sender-/Empfängerpaars (24, 30 und/oder 22) wenigstens ein die Beleuchtungsanlage (14) regelnder Präsenzmelder (40) angeordnet ist, auch mit einem integrierten Lichtsensor (30, 22).

11. Steuerungseinrichtung (16) nach Anspruch 9 oder 10, **dadurch gekennzeichnet, dass** die Photodiode oder der Photowiderstand mit einer Verstärkerschaltung und bevorzugt einem Bandpassfilter ausgestattet ist.

12. Steuerungseinrichtung (16) nach Anspruch 11, **dadurch gekennzeichnet, dass** im Lichtsensor (22) eine Linse (50) angeordnet ist, welche die Beleuchtungsstärke (E) im beleuchteten Bereich (18) auf eine aktive Sensorfläche (52) abbildet.

13. Steuerungseinrichtung (16) nach Anspruch 10 oder 11, **dadurch gekennzeichnet, dass** die Photodiode oder der Photowiderstand des Lichtsensors (22) in einer in Richtung einer zum beleuchtenden Bereich (18) offenen Hülse (46) angeordnet ist, welche vorzugsweise rechtwinklig zur Mitte des beleuchteten Bereichs (18) ausgerichtet ist.

14. Steuerungseinrichtung (16) nach einem der Ansprüche 9 bis 13, **dadurch gekennzeichnet, dass** mehrere parallel geschaltete Sender (24), vorzugsweise vier bis sechs, Messsignale (26) senden, und ein zentraler Empfänger (30, 22) für reflektierte Messsignale (28) angeordnet sind.

## Claims

1. Method to control a lighting system (14) which, for a prespecified illumination intensity (E₀) in a region to be illuminated, in particular at a workplace, regulates with changing reflection conditions, **characterised in that**
- at least one light sensor (22) which is arranged remote from the illuminated region (18) measures the entire illumination intensity (E), and when this rises above an adjustable threshold value switches off the illumination system (14), and when it falls below said value switches it on, or regulates the illumination system (14) to a prespecified value,
- measurement signals (26), continuous or modulated by at least one sender (24), are emitted to the illuminated region (18), reflected there and received in a targeted manner by at least one receiver (30, 22),
- an analysis and control unit (34) determines a correction factor from comparison of the emitted measurement signals (26) and the received measurement signals (28), evaluates this factor with a prespecified calibrated curve and corrects the measured illumination intensity (E), and
- on a deviation of the corrected illumination intensity (E) from the prespecified illumination intensity (E₀), automatically increases or reduces the light intensity (I) of the illumination system (14).

2. Method according to claim 1, **characterised in that** the illumination system (14) is controlled or regulated by at least one light sensor (22) or at least one light sensor (22) and at least one presence sensor (40).

3. Method according to claim 1 or 2, **characterised in that** the sender (24) emits measurement signals (26) not perceptible to human sense organs, preferably IR signals.

4. Method according to claim 1 or 2, **characterised in that** the sender (24) emits visible light signals (26).

5. Method according to any of claims 1 to 4, **characterised in that** the sender (24) is operated with a peak current and the correction factor is determined from the amplitude change of the reflected measurement signal (28).

6. Method according to claim 5, **characterised in that** to generate the rectangular measurement signals which are pulsed at intervals of 5 to 20 ms, a current pulse is generated for 0.05 to 0.2 ms.

7. Method according to any of claims 1 to 6, **characterised in that** it is performed with a substantially straight characteristic curve calibrated on a white base (18), which defines a colour-dependent correction factor.

8. Method according to any of claims 1 to 7, **characterised in that** it is performed with a calibrated curve which is dependent on the distance of the region to be illuminated from the sender (24) / receiver (30) and runs substantially straight.

9. Control device (16) for an illumination system (14) wherein the control device has at least one light sensor (22), at least one sender (24) for modulated or continuous measurement signals (26), at least one receiver (30) for the reflected measurement signals (28) and an analysis and control unit (34) for performance of the method according to any of claims 1 to 8, **characterised in that** the senders (24) comprise a powerful IR-LED with a sensor surface (52) and the receivers (30, 22) comprise a high sensitivity photodiode or a photoresistor, wherein a remotely arranged sender/receiver pair (24, 30 and/or 22) has an identical or largely identical working spectrum.

10. Control device (16) according to claim 9, **characterised in that** in the region of the sender/receiver pair (24, 30 and/or 22) is arranged at least one presence sensor (40) regulating the illumination system (14), also with an integral light sensor (30, 22).

11. Control device (16) according to claim 9 or 10, **characterised in that** the photodiode or photoresistor is fitted with an amplifier circuit and preferably a band pass filter.

12. Control device (16) according to claim 11, **characterised in that** in the light sensor (22) is arranged a lens (50) which depicts the illumination intensity (E) in the illuminated region (18) on an active sensor surface (52).

13. Control device (16) according to claim 10 or 11, **characterised in that** the photodiode or photoresistor of the light sensor (22) is arranged in a sleeve (46) which is open in the direction towards the region (18) to be illuminated, which sleeve is preferably aligned at right angles to the centre of the illuminated region (18).

14. Control device (16) according to any of claims 9 to 13, **characterised in that** several senders (24) which are connected in parallel, preferably four to six, emit measurement signals (26), and a central receiver (30, 22) is provided for reflected measurement signals (28).

## Revendications

1. Procédé de commande d'installation d'éclairage (14), qui régule une intensité d'éclairage prédéfinie (E₀) dans une zone (18) à éclairer, en particulier un poste de travail, lorsque les conditions de réflexion varient,
**caractérisé en ce que**
- au moins un capteur (22) de lumière éloigné de la zone éclairée (18) mesure l'intensité d'éclairage globale (E), et désactive l'installation d'éclairage (14) lorsqu'une valeur de seuil réglable est dépassée, active l'installation lorsque la valeur de seuil n'est pas atteinte, ou régule l'installation d'éclairage (14) à une valeur prédéfinie,
- des signaux de mesure (26) modulés ou continus sont émis sur la zone éclairée (18) par au moins un émetteur (24), sont réfléchis par celle-ci et sont reçus de façon ciblée par au moins un récepteur (30, 32),
- une unité d'évaluation et de commande (34) détermine une facteur de correction à partir de la comparaison entre les signaux de mesure émis (26) et les signaux de mesure réfléchis (28), attribue une valeur à ce facteur au moyen d'une courbe caractéristique calibrée, prédéfinie, et corrige l'intensité d'éclairage mesurée (E), et
- élève ou abaisse automatiquement l'intensité lumineuse (I) de l'installation d'éclairage (14) lorsque l'intensité d'éclairage corrigée (E) s'écarte de l'intensité d'éclairage prédéfinie (E₀).

2. Procédé selon la revendication 1, **caractérisé en ce que** l'installation d'éclairage (14) est commandée ou régulée par au moins un capteur (22) de lumière, ou par au moins un capteur (22) de lumière et au moins un indicateur (40) de présence.

3. Procédé selon la revendication 1 ou 2, **caractérisé en ce que** l'émetteur (24) émet des signaux de mesure (26) imperceptibles par les organes sensoriels humains, de préférence des signaux infrarouges.

4. Procédé selon la revendication 1 ou 2, **caractérisé en ce que** l'émetteur (24) émet des signaux lumineux visibles (26).

5. Procédé selon l'une quelconque des revendications 1 à 4, **caractérisé en ce que** l'émetteur (24) est excité par un courant de crête, et que le facteur de correction est déterminé à partir de la variation d'amplitude du signal de mesure réfléchi (28).

6. Procédé selon la revendication 5, **caractérisé en ce qu'**une impulsion de courant est générée pendant 0,05 à 0,2 ms pour générer les signaux de mesure carrés rythmés à intervalles de 5 à 20 ms.

7. Procédé selon l'une quelconque des revendications 1 à 6, **caractérisé en ce qu'**il est exécuté au moyen d'une courbe caractéristique sensiblement rectiligne, qui est calibrée sur une base blanche (18) et définit un facteur de correction dépendant de la couleur.

8. Procédé selon l'une quelconque des revendications 1 à 7, **caractérisé en ce qu'**il est exécuté au moyen d'une courbe caractéristique calibrée de tracé sensiblement rectiligne, qui dépend de la distance entre la zone à éclairer et l'émetteur (24) / le récepteur (30).

9. Dispositif de commande (16) d'installation d'éclairage (14), dans lequel l'unité de commande comprend au moins un capteur (22) de lumière, au moins un émetteur (24) de signaux de mesure (26) modulés ou continus, au moins un récepteur (30) de signaux de mesure réfléchis (28), et une unité d'évaluation et de commande (34) pour exécuter le procédé conforme à l'une quelconque des revendications 1 à 8, **caractérisé en ce que** les émetteurs (24) comprennent une diode électroluminescente, ou DEL, infrarouge (IR-LED, initiales de Infrared light emitting diode) de forte puissance accompagnée d'une surface (52) de capteur et les récepteurs (30, 22) comprennent une photodiode de haute sensibilité ou un photoconducteur, sélectionnés d'une manière telle que les spectres de travail d'une paire formée d'un émetteur et d'un récepteur (24, 30 et/ou 22) éloignés l'un de l'autre sont identiques ou largement identiques.

10. Dispositif de commande (16) selon la revendication 9, **caractérisé en ce qu'**un indicateur de présence (40) qui régule l'installation d'éclairage (14) est disposé, en plus d'un capteur de lumière intégré (30, 22), dans la zone de la paire émetteur / récepteur (24, 30 et/ou 22).

11. Dispositif de commande (16) selon la revendication 9 ou 10, **caractérisé en ce que** la photodiode ou le photoconducteur est équipé d'un circuit amplificateur et, de préférence, d'un filtre passe-bande.

12. Dispositif de commande (16) selon la revendication 11, **caractérisé en ce que** le capteur (22) de lumière inclut une lentille (50) qui focalise, sur une surface active (52) de capteur, l'intensité d'éclairage (E) dans la zone éclairée (18).

13. Dispositif de commande (16) selon la revendication 10 ou 11, **caractérisé en ce que** la photodiode ou le photoconducteur du capteur (22) de lumière est disposé dans une gaine (46) qui est ouverte vers la zone à éclairer (18) et qui est de préférence orientée vers le milieu de la zone à éclairer (18) selon une direction perpendiculaire à cette zone.

14. Dispositif de commande (16) selon l'une quelconque des revendications 9 à 13, **caractérisé en ce que** plusieurs émetteurs (24) montés en parallèle, de préférence quatre à six, émettent des signaux de mesure (26), et qu'un récepteur central (30, 22) est disposé pour recevoir les signaux de mesure réfléchis (28).
